Europäisches Patentamt

European Patent Office

Office européen des brevets

(19)

(11) Publication number: **0 096 887**
A2

(12)

# EUROPEAN PATENT APPLICATION

(21) Application number: 83105816.9

(51) Int. Cl.³: **G 01 N 3/12**

(22) Date of filing: 14.06.83

(30) Priority: 15.06.82 PL 236919

(43) Date of publication of application: 28.12.83
Bulletin 83/52

(84) Designated Contracting States: **AT DE FR GB IT NL**

(71) Applicant: **Instytut Chemii Przemyslowej, Rydygiera Strasse 8, Warszawa (PL)**

(72) Inventor: **Pawet, Friedrich, Generata Zajaczka Strasse 17, Warszawa (PL)**
Inventor: **Ptaczek, Wiestaw, Kickiego Strasse 5, Warszawa (PL)**
Inventor: **Mynarz, Leszek, Batuty Strasse 1, Warszawa (PL)**
Inventor: **Tarasiuk, Tadeusz, Krochmalna Strasse 30, Warszawa (PL)**

(74) Representative: **Patentanwälte Zellentin, Zweibrückenstrasse 15, D-8000 München 2 (DE)**

(54) Plastic pipes internal pressure strength testing device.

(57) Plastic pipes internal pressure strength testing device comprising a heating system and a hydraulic system, where in the hydraulic system is a hydropneumatic system, which has as a basic part, a hydropneumatic converter, the piston with the smaller diameter of which is connected from one side with the tested sample placed in the heating chamber, via a non-return valve, manometers, advantageously a test manometer and a contact manometer, valves and a heater, and from the other side with the water supply network via a second non-return valve and an advantageously electromagnetic valve, whereas the piston of this converter with the larger diameter is connected via a second, advantageously electromagnetic valve, a compensation tank and a gas regulator with a gas supplying net, advantageously air supplying net.

PATENTANWÄLTE
ZELLENTIN
ZWEIBRÜCKENSTR. 15
8000 MÜNCHEN 2

Instytut Chemii Przemyslowej
Rydgiera Str. 8, Warszawa,
Poland

June 14, 1983
Eu 83 224
AS/fr/K

# PLASTIC PIPES INTERNAL PRESSURE STRENGTH TESTING DEVICE

The invention relates to a plastic pipes internal pressure strength at raised temperature testing device.

Plastic pipes strength testers have to determine the exploitation parameters of these pipes i.e. the permissible temperature and pressure, as well as their service life.

The procedures of determining said exploitation parameters, known to date consist in conducting pressure tests. Indispensable for this purpose are special installations enabling one to carry out pressure tests. In order to conduct tests in such an installation there has to be maintained within the sample a constant pressure (e.g. by filling it with water) of a definite accuracy (as a rule $\pm$ 2%), and a constant temperature of the sample with a temperature tolerance of $\pm$ 1$^{o}$C and the possibility of recording of the testing time must be provided.

Thus e.g. the device for pressure testing of pipes known from the Polish patent specification No. 89.754 consists of two essential parts — the heating system keeping the sample during its testing at a constant temperature , and the hydraulic power transmission system controlling the venting of the test pieces, their filling with water of a definite temperature, as well as generating and maintaining during the testing a water pressure within the sample corresponding to the required stress in its walls until the moment of cracking. The heating system is usually constituted by a heating chamber filled with a liquid heating medium, and in the chamber there are samples placed, alone or in sleeves, heated directly or indirectly by means of the heating medium.

The known hydraulic systems used in devices of this kind contain as an essential part special hydraulic gas accumulators or water pressure pumps (known from tenders of Durapipe Austria, Institut für Prüftechnik, Munich, Federal Republic of Germany).

These know technical solutions have, however, certain shortcomings. E.g., it is necessary to use in all of them pressure vessels, which constitute an industrial safety hazard, particularly when high pressures are applied.

Besides of that the hydraulic system without a pressure pump requires a periodical manual complementation of pressure from an external pressure source e.g. from a compressed gas cylinder. This is very onerous for the servicing personnal and, what is most important, it makes it very often impossible to maintain the pressure within the required range of $\pm$ 2%, while exceeding these admissible pressure deviations is equivalent to an interruption of the test and to the necessity to repeat it.

The hydraulic system based on the use of a pressure pump is characterized by big dimensions, a complicated control system, high selb-cost and the necessity to use hydraulic compensators in order to prevent shock pressure surges (water hammer) at the moment of setting the pump in action. This is due to the fact that the virtual pressure must be controlled and monitored i.e. a water pressure reaching very often high values (8MPa and more).

The technical difficulties named above are eliminated by the device according to the present invention providing a new hydraulic system and an improved adjustment of the heating system to this system. The new hydraulic system taken in combination with the heating system constitutes a technical solution unknown hitherto in apparatuses of the kind, simplifying considerably the pressure control system.

The present invention makes it possible to obtain the desired test pressure in a mild way, to maintain this pressure with the required accuracy during an optionally long time, to complement the decrements of the medium in the samples brought about by their deformation, without change of the previously set up pressure, and to disengage the system at the moment of sample cracking. Besides of that the small dimensions of the hydraulic system allow to provide every stand of the device with an independent hydraulic system, rendering it thus possible to carry out simultaneously several tests at various levels of stress.

The device according to the invention consists of two substantial systems: the known heating system, constituting a heating chamber containing a liquid heating medium, advantageously water, equipped with auxiliary elements such as: heaters, consoles for samples placed directly in the heating medium, attachments for connecting simultaneously in series several samples etc. In relation to former hydraulic systems the system according to the invention may be common for all samples connected in series, or every sample may have its own independent hydraulic system , allowing to use on every test stand different testing conditions chosen at will.

The hydraulic system performs three fundamental functions: venting and filling the samples, loading the samples with pressure, maintaining this pressure in an optionally long time and disengaging the hydraulic system at the moment of sample cracking.

The hydraulic system of the device according to the invention contains as basic element - a hydropneumatic transmission - in the following referred to as "hydraulic intensifier" with a transmission rate from 1 : 10 to 1 : 50 (ratio of the piston diameters). The intensifier piston with the smaller diameter is from one side via a non-return valve, adequate manometers (advantageously a test manometer and a contact manometer), valves and heaters connected with samples placed in the chamber containing the heating medium while this piston is from the other side via a non-return valve and a electro-magnetic valve connected with the water supply network.

Contrariwise the intesifier piston with the larger diameter is connected via an advantageously electromagnetic valve, a compensation tank, a gas regulator with a gas feeding source, advantageously air. In the device according to the invention it is not the high pressure of the water which is controlled but the air feeding the intensifier with a pressure in the range of 0 - 0,25 MPa. The pressure of the feeding air may amount to 0,3 - 1,0 MPa, ensuing from it that the apparatus is adapted for cooperation with the compressed air installation of the factory or with a transportable compressor.

The device according to the invention is hereinafter explained in more detail, referring to a practical example shown in the drawings.

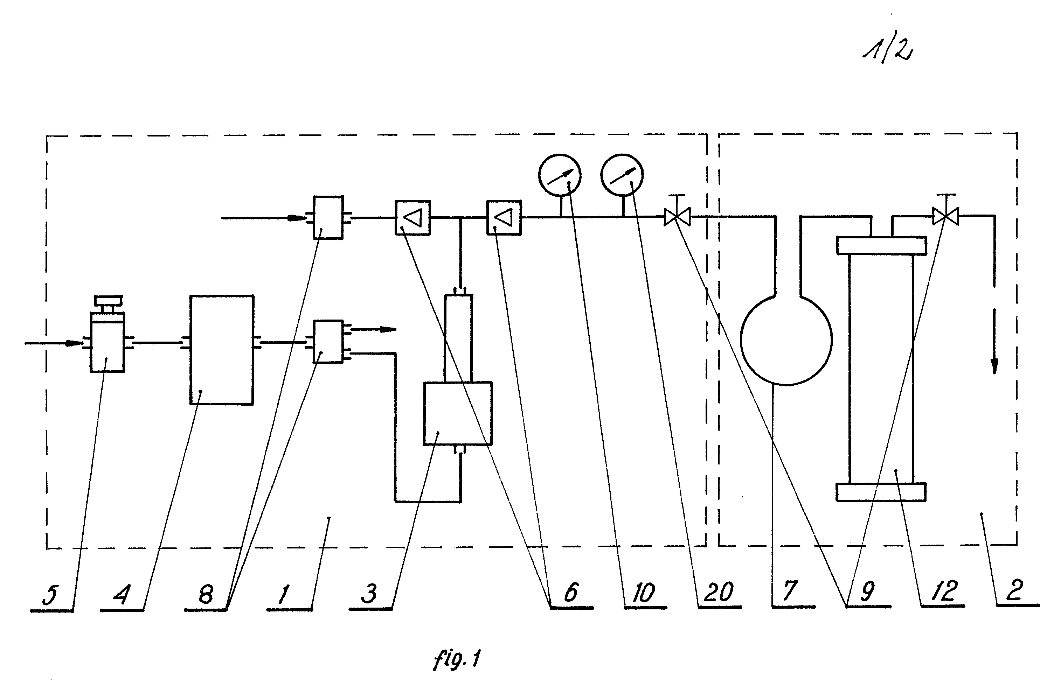

Fig. 1 shows the diagram of connections of one stand in the heating chamber of the sample with the hydropneumatic system, and

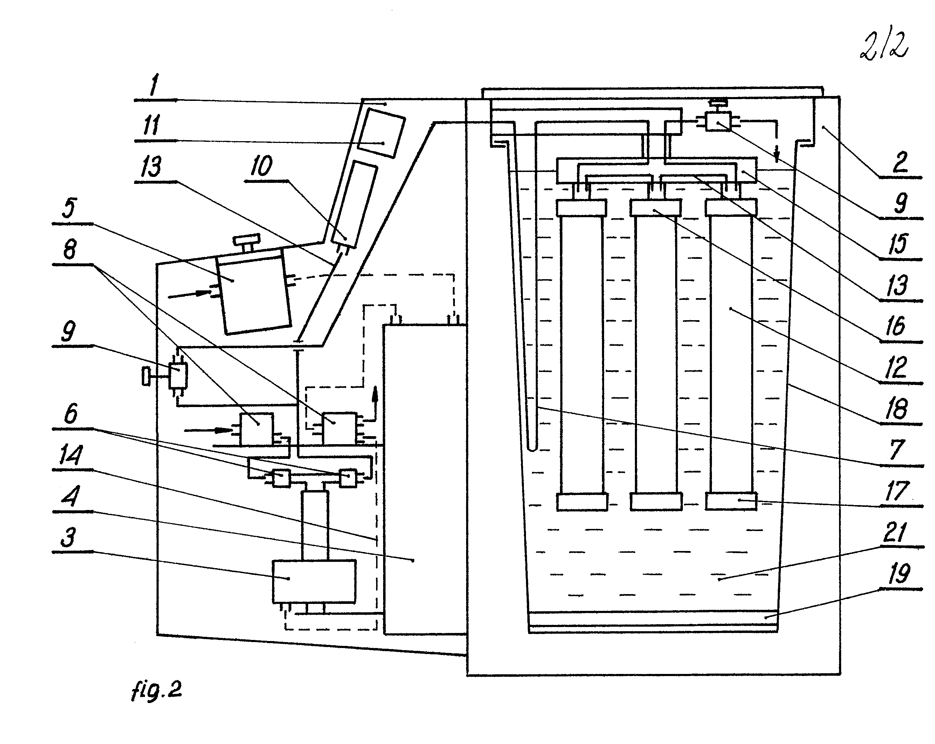

Fig 2 shows a cross-section of the device according to the invention.

The device according to one embodiment of the present invention consists of a heating chamber 2 and of a hydraulic system 1 attached to it. The heating chamber comprises a tank 18 filled with the medium, advantageously water 21, in which samples 12 are immersed pipe (the amount of samples depends on the pipe diameter). The heating chamber is provided with electric heating elements 19, the constant water temperature in the range from the ambient temperature to $95^{\circ}C$ being maintained by the additionally installed in the chamber thermoregulator coupled with a temperature-sensitive element (not shown). The chamber is also equipped with consoles to hang the samples 12 immersed in the heating medium 21 and optionally with attachments 15 rendering if possible to connect the samples in series. Every sample placed in the chamber is connected with a separate hydraulic system 1 (samples connected in series are all connected with one hydraulic system). In the chamber there is installed a heater 7 which allows it to introduce into the sample 12 water having a temperature close to the testing temperature, cutting considerably down the conditioning period.

As an integral part of the hydraulic system 1 there is provided a hydropneumatic intensifier 3 with a transmission rate (as the occasion demands) from 1 : 1o to

1 : 5o. The intensifier 3 controls the venting of the samples 12, filling them with water, loading the samples 12 with the desired pressure, maintaining this pressure and disengaging the hydraulic system at the moment of cracking.

The intensifier 3 is provided with a system. of extreme change - over switches (not shown) controlled by extreme positions of its pistons. The intensifier 3 piston with the smaller diameter is connected from one side in the system of low-pressure conduits 14 via a non-return valve 6, an electromagnetic valve 8 and the water-pipe network. On the other hand, this piston in the system of high-pressure conduits 13 is connected with a second non-return valve 6, a monitoring manometer 1o, a contact manometer 2o, two hand-operated valves 9, a heater 7 and the sample 12. The contact manometer 2o transmits at the moment of cracking of the sample 12 an impulse to the hour recorder 11, which records the duration of the test.

The intensifier 3 piston with the larger diameter is connected in the system of low-pressure conduits 14 with the second electromagnetic valve 8, the low-pressure compensation tank 4, the gas regulator 5 and the air feeding source.

The execution of the measurement by means of the device according to the invention consists in the first stage in placing the pipe samples 12 in the heating chamber 2.

Subsequently, the samples 12 are vented and filled with water in such a way that the feeding water from the water-pipe network flows through the electromagnetic valve 8, the non-return valve 6, complements the hydraulic part of the intensifier 3 and flows subsequently through the second non-return valve, the hand-operated valve 9, being open, flows then through the heater 7 and enters the sample 12, displacing from it the air through the final hand-operated valve 9. At the moment when water flows through this valve, it is being closed, ending thus the stage of filling and venting. The second stage, this means the generation of the required pressure of water inside the sample consists in supplying the feeding air with a pressure necessary to produce, using the transmission of the intensifier, a testing pressure, the value of which is displayed on the test mano-meter 1o. Simultaneously, during the operations described, above the sample 12 of the pipe is loaded with pressure. Such system has the advantage that the loading of the sample 12 proceeds very mildly without striking pressure increases, which is in tests of this kind of great importance.

The pressure set up to a given value does not change in optionally long time in spite of the deformation of the sample 12 growing during the test and its capacity (volume) consequently increasing. The system in the apparatus according to the invention is characterized in that independ-ently from the quantity of water being under a definite pressure it is capable to force through this water to any closed volume in any quantity without a change of the pressure set up originally. The last phase, this means the shut-down of the whole system at the moment of cracking of the sample or one sample takes place in consequence of an impulse transmitted from the contact manometer 2o to the electromagnetic valves 8, which cut off the supply of water from the water-pipe network and of the fed air, putting thus the whole hydraulic system out of action. The hydraulic system is fitted for work with normal and automatic control. Manual control takes place when the samples are being filled and vented an when the required pressure is being set up. Once these activities have been carried out, the system is switched over to automatic work. This state is characterized in that all actions, such as complementing water in the sampe 12 under pressure set up before, movements of the intensifier 3, removal of air from it and drawing a new portion of water from the water-pipe network, proceed automatically without any effect on the high pressure prevailing in the sample of the pipe. The shut-down of the hydraulic system takes also place automatically as described hereinbefore. It is necessary to add that putting out of action of the hydraulic system on one stand of the device does not disturb at all the work of the remaining stands.

It has been assumed in the practical example that the tank has three stands, with which are connected samples fastened in special holders: the upper holder 16 and the lower holder 17.

Pipes with a large diameter are connected one by one to a hydraulic system of the device. If pipes with a smaller diameter are tested, special attachments 15 on every stand may be used, allowing simultaneous testing of larger quantities of pipe samples. This fact increases substantially the qualities of the device, as the majority of pipes produced from plastic are pipes with smaller diameters. All samples fastened in series to one stand of the device by means of attachments 15 are loaded with equal internal pressure. The requirements concerning pressure tests of plastic pipes, as strength index of the pipe in given conditions, assume the minimal time until the moment of its failure (crack). For one standardization point are to be put on test at least three samples of pipes from the inspection lot. If pipe samples are connected by means of an attachment 15, the time of cracking of the first of them constitutes the index determining the strength of all the remaining, what is evident.

0096887

PATENTANWÄLTE
Z E L L E N T I N
ZWEIBRÜCKENSTR. 15
8000 MÜNCHEN 2

June 14, 1983
Eu 83 224

Claims

1. Plastic pipes internal pressure strength testing device comprising two substantial systems

- a heating system providing the keeping of the tested samples at a constant temperature and constituting a thermostatic heating chamber filled with a liquid heating medium, advantageously water, said chamber being further equipped with auxiliary elements such as e.g. electric heaters, holders of samples immersed directly in the heating medium, attachments for connecting samples in series and

- a hydraulic system producing and controlling the internal pressure in the samples, c h a r a c t e r - i z e d   i n

that every single sample placed in the heating chamber or all samples connected in series cooperate with one or several hydropneumatic systems, each one having as a basic part a hydropneumatic converter,

the piston with the smaller diameter of which is connected from one side with the tested sample (12) placed in the heating chamber (2), via a non-return valve (6), manometers, advantageously a test manometer (1o) and a contact manometer (2o), valves (9) and a heater (7), and from the other side with the water supply network via a second non-return valve (6) and an advantageously electromagnetic valve (8),

whereas the piston of this converter with the larger diameter is connected via a second, advantageously electromagnetic valve  (8), a compensation tank (4) and a gas regulator (5) with a gas supplying net, advantageously air supplying net.

2. Device according to claim 1, wherein the heating chamber (2) comprises a heater (7) connected with the sample (12) and included into the cycle of water supply to the sample.

3. Device according to claim 1, wherein the hydraulic system (1) is equipped with an attachment (15) allowing to connect the samples (12) in series with the hydraulic system.

4. Device according to claim 1, wherein the hydropneumatic converter has a ration from 1:10 to 1:50.

fig.1

0096887

fig.2